# EUROPEAN PATENT APPLICATION

(11) **EP 3 081 603 A1**
(43) Date of publication of application: **19.10.2016**
(21) Application number: 15164130.5
(22) Date of filing: 17.04.2015
(51) Int. Cl.: C09D 5/00, C09D 7/12

(54) **SURFACE COATING COMPOSITION FOR FORMATION OF FILMS HAVING HIGH WATER VAPOR PERMEABILITY AND PREPARATION METHOD THEREOF**

(71) Applicant: Betek Boya ve Kimya Sanayi A.S., Kocaeli (TR)
(72) Inventor: Orbay, Murat, Kocaeli (TR); Kurt, Salih Zeki, Kocaeli (TR); Somtürk, Sabit Mert, Kocaeli (TR); Eren, Mesutren, Kocaeli (TR); Emek, Inci Yaprak, Kocaeli (TR)
(74) Representative: Sevinç, Erkan

(57) **Abstract**

The present invention proposes a surface coating composition for formation of films having high water vapor permeability, comprising at least %5 by weight of acicular extender having an aspect ratio higher than 4:1, with respect to the total weight of the surface coating composition. The present invention further proposes a method for preparation of a surface coating composition for formation of films having high water vapor permeability, said method comprising the sequential steps of: loading water, surfactant, a first portion of thickener and a pH modifier into a disperser, and applying a low-shear mixing thereon for at least three minutes, thus obtaining a first mixture; adding dispersant and one or more acicular extender having an aspect ratio higher than 4:1 onto said first mixture, and applying a high-shear mixing thereon for 10 to 15 minutes, thus obtaining a grind; and adding additives onto said grind, and applying a low-shear mixing thereon for at least three minutes; wherein said additives comprising one or more ingredients selected from a list consisting of binders, silicone, film forming agent, co-solvent, biocide, and defoamer; thus obtaining a surface coating composition; wherein the amount of acicular extender added in step (b) is such that the final weight percentage of acicular extender is at least 5% by weight of the final total weight of the surface coating composition.

## Description

### Technical Field of the Invention

The present invention relates to a surface coating composition for formation of films having high water vapor permeability and preparation method thereof.

### Background of the Invention

A coating (e.g. paint) applied on a substrate (e.g. a wall) should remain thereon for a long time and should also protect the wall during this period. In other words, it should resist water, not permitting the outside condensation or rain water through and it should also not allow humidity to condense between the substrate and the coating layer. Water resistance means also resistance of the coating toward absorption of water, since water causes softening of the coating and a loss of substrate adhesion, the substrate thus being exposed to the penetration of water. If moisture enters the substrate, for example due to penetration from the other side of the wall or directly from the ground, a sufficient transmissibility of the coating for water vapor ought to guarantee rapid re-drying of the substrate. Where the coatings are based on aqueous binders, such as polymer dispersions, the water vapor transmission (WVT) of the dispersion film, in conjunction with its water resistance, is accorded critical importance. Water resistance is nowadays provided by most of the commercial binders, especially with low pigment volume concentration (low PVC) formulations, but commercial binders do not provide excellent WVT.

WO 2011/066160 A1 patent application claims success with a coating composition containing significant amounts of water soluble polymers and alkali metal nitrites; but they can hardly find an application for commercial exterior paints due to toxicity of alkali metal nitrites.

Numerous extenders for exterior paints have been in use for decades, but Wollastonite is a recent option. This calcium metasilicate mineral occurs as prismatic crystals that cleave into massive-to-acicular fragments with "high aspect ratios" up to 20:1. It is usually white, but also may be gray, brown, or red depending on its composition. Numerous patents or patent applications such as US 3 870 553, DE 197 25 761 A1, WO 00/11089 A1, WO 03/027165 A1 claim this naturally occurring mineral allows formulators to improve the cohesive strength of their ceramic or polymeric products to obtain better corrosion and barrier properties, provide hardness, improve impact resistance and thermal stability at high temperatures.

It is also claimed that this mineral is a primary and/or synergistic corrosion inhibitor; reduces cracking and checking; improves mar/scratch/gouge resistance; increases scrubbability, barrier properties, thermal stability for high-temperature coatings, thermal shock resistance and emissivity; acts as an efficient matting agent; buffers the paint during storage; enhances TiO₂; improves product consistency and quality; is also an inert, bio-soluble and non-hazardous replacement for asbestos and other artificial fibers. Examples of patents, patent applications and publications covering these properties include WO 2007/125038 A2, WO 2008/151997 A1, WO 03/018676 A1, and "Calcium Metasilicate", by Michael A. Wolfe, Paint and Coatings Industry, May 2012.

A surface coating composition usually comprises one or more conventional or core-shell type polymeric binder. Said binder can be a homopolymer, copolymer, or terpolymer, such as acrylic esters, polyvinyl acetate, styrene-acrylic, styrenebutadiene, vinyl acetate-acrylic, ethylene-vinyl acetate, ethylene-vinyl acetate-vinyl versatate, vinyl acetate-vinyl versatate, vinyl acetate-vinyl maleate, vinyl acetate-vinyl chloride-acrylic, ethylene-vinyl acetate-acrylic, silicone and urethane polymers. Said binder may further contain carboxylic acid, phosphate, sulfate, sulfonate, amide and combinations of functional groups as well as non-functional monomers, and mixtures thereof.

A surface coating composition may also comprise other common components known in the art, including additives, dispersed pigments, extenders and water.

Pigments for use in a surface coating composition may be inorganic or organic pigments known in the art. Such inorganic pigments may be inorganic white pigments such as titanium dioxide, barium sulfate, zinc oxide, zinc sulfide, basic lead carbonate, antimony trioxide, and lithopone; inorganic colored pigments such as iron oxides, carbon black, graphite, zinc yellow, zinc green, ultramarine, manganese black, antimony black, manganese violet, Paris blue or Schweinfurt green. An organic colored pigment for use in a surface coating compositon can be sepia, gamboge, Cassel brown, toluidine red, para red, Hansa yellow, indigo, azo dyes, anthraquinonoid and indigoid dyes, and also dioxazine and quinacridone, phthalocyanine, isoindolinone, and metal-complex similar pigments.

A surface coating composition may comprise filler such as aluminosilicates e.g. feldspars; silicates such as kaolin, talc, mica, magnesite; alkaline earth metal carbonates such as calcium carbonate (calcite), magnesium carbonate, dolomite; alkaline earth metal sulfates, and silicon dioxide; or a mixture thereof. The filler can be finely divided, thus the hiding power which can mainly be provided by titanium dioxide, can be supplemented. The filler may be used as an individual component. The filler can also be a mixture of two or more filler, such as calcium carbonate/kaolin or calcium carbonate/talc mixtures. When the particle size and amount of the filler in a surface coating composition are very small, a glossy coating can be provided. The amount of the filler in the surface coating composition can also be zero for high gloss values. In order to adjust the hiding power of the hue and the depth of color it is preferred to use blends of color pigments and fillers.

Additives for use in a surface coating composition may include dispersants and stabilizers for pigments and extenders (such as sodium, potassium or ammonium polyphosphates, alkali metal salts and ammonium salts of acrylic acid or maleic anhydride copolymers, etc.), deaerators and defoamers (such as mineral oils, silicones, glycol ethers, polyacrylates etc.), biocides/fungicides (such as formaldehyde donors, isothiazoline derivatives, biguanidines, benzimidazoles), coalescing solvents (glycols, glycol ethers, glycol ether esters, etc.), rheology modifiers and thickeners (cellulosics, bentonite, alkali swellable emulsions, polyurethanes, etc.), as well as problem solvers for specific demands and defects available for a skilled person in the art.

The proportion of the pigments and extenders can be expressed by the pigment volume concentration (PVC). The PVC describes the ratio of the volume of pigments and extenders to the total volume, composed of the volumes of binder, pigments and extenders of a dry coating film in percent (Ullmann's Enzyklopädie der technischen Chemie, 4th Edition, Volume 15, p. 667).

Since the surface coating composition comprises various types of matter, its components may physico-chemically interact with each other; furthermore the order and duration of each step, temperature and several other factors may affect the final properties of the surface coating composition. Therefore the surface coating composition is preferably to be tested for its viscosity, specific gravity, pH, storage stability, and rheological properties.

The surface coating composition according to the present invention may be spray-applied, brushed, or otherwise coated onto a substrate. The substrate can be a cementitious surface such as cement, mortar, masonry and concrete. The substrate may also include gypsum board and sheathing, or some other building construction surface known in the art, such as wood, plywood, fiberboard, particle board, and rigid insulation. The substrate may also comprise an already applied primer or a previous paint layer to be coated with the surface coating composition according to the present invention. Upon application on a substrate, as is the custom, the coating is preferably tested for their color and color strength, gloss, hiding power, open time, metamerism, rub out and adherence properties, as well as weathering resistance, such as cracking, chalking, and color changes.

Most of these properties are important for a painter, but for the final consumer the most important changes after exposure to weathering is fungus growth, cracking and finally the detachment of the paint layer due to lack of proper water vapor transmission through the coating layer. Unfortunately, although most of the paints depending on commercially available binders provide good to excellent protection to water absorption, they generally lack the ability to transfer efficiently the humidity due the water vapor accumulation on either side of the paint film.

The water vapor permeability is expressed in terms of the equivalent air layer thickness (S_{d}), given in meters (m). The equivalent air layer thickness defines the thickness of an air layer providing the same resistance to vapor diffusion as the tested specimens. Most commercial coatings possess S_{d} values between 0.5-2.0 m. Some silicate and silicone paints may have low values of S_{d}, due to binder properties ("Coatings applied on damp building substrates: performance and influence on moisture diffusion" , V. Brito, T. D. Gonçalves, P. Faria, J. Coat. Technol. Res. 8(4) 513-525, 2011, "The modeling technology of protective silicone coatings in terms of selected physical properties: Hydrophobicity, scrub resistance and water vapour diffusion", W. Brachaczek, Progress in Organic Coatings, 77, 859-867, 2014) but their application is quite limited, due to their insufficiency in properties or cost.

Thus, it is necessary to provide a surface coating composition for formation of films having high water vapor permeability and high liquid water impermeability.

It is further necessary to provide a method for preparation of a surface coating composition for formation of films having high water vapor permeability and high liquid water impermeability.

### Objects of the Invention

Primary object of the present invention is to overcome the abovementioned shortcomings of the prior art.

Another object of the present invention is to provide a surface coating composition for formation of films having high water vapor permeability and high liquid water impermeability.

A further object of the present invention is to provide a method for preparation of a surface coating composition for formation of films having high water vapor permeability and high liquid water impermeability.

A further object of the present invention is to provide such surface coating composition and method for preparation thereof, without affecting the gloss and where applicable, the hiding power.

### Summary of the Invention

The present invention proposes a surface coating composition for formation of films having high water vapor permeability, comprising at least %5 by weight of acicular extender having an aspect ratio higher than 4:1, with respect to the total weight of the surface coating composition. The present invention further proposes a method for preparation of a surface coating composition for formation of films having high water vapor permeability, said method comprising the sequential steps of: loading water, surfactant, a first portion of thickener and a pH modifier into a disperser, and applying a low-shear mixing thereon for at least three minutes, thus obtaining a first mixture; adding dispersant and one or more acicular extender having an aspect ratio higher than 4:1 onto said first mixture, and applying a high-shear mixing thereon for 10 to 15 minutes, thus obtaining a grind; and adding additives onto said grind, and applying a low-shear mixing thereon for at least three minutes; wherein said additives comprising one or more ingredients selected from a list consisting of binders, silicone, film forming agent, co-solvent, biocide, and defoamer; thus obtaining a surface coating composition; wherein the amount of acicular extender added in step (b) is such that the final weight percentage of acicular extender is at least 5% by weight of the final total weight of the surface coating composition.

### Brief Description of the Figures

The figures, whose brief explanations are herewith provided, are solely intended for providing a better understanding of the present invention and are as such not intended to define the scope of protection or the context in which said scope is to be interpreted in the absence of the description.
Figure 1 shows SEM Micrographs of opaque paints with sample codes of (a) OP-H-1, (b) OP-H-6, (c) OP-L-1, and (d) OP-L-6.
Figure 2 shows SEM Micrographs of semitransparent paints with sample codes of (a) T-H-1, (b) T-H-5, (c) T-L-1, and (d) T-L-6.

### Detailed Description of the Invention

Referring now the figures outlined above, the present invention proposes a surface coating composition for formation of films having high water vapor permeability and preparation method thereof. With the product and process proposed according to the present invention, a significant improvement of water vapor transmission rate in water based coatings by employment of acicular extenders is achieved.

Even though use of wollastonite as an example of acicular extender in surface coating formulations, prior art publications do not refer to nor lead to any improvement on water vapor transmission by using acicular extenders in surface coating compositions.

The present invention relates to the improvement of water vapor transmission ability in water based architectural paints by partial or complete substitution of conventional extenders with acicular (needle like) extenders, and providing preferable particle size and distribution thereof. The present invention further relates to an aqueous, liquid-applied coating composition that can be applied -at moderate and low temperatures and that dries to produce a water impermeable, water-vapor permeable coating.

The approach for the creation of this invention is based on special structure of extender to be dispersed in the surface coating composition according to the present invention; said structure is fibrous and acicular, and when it is applied on a substrate, it provides a grid of micro pores in a coating layer (i.e. a polymer matrix), offering a high water vapor transmission through the coating layer; notwithstanding the chemical properties of the extender. Thus surface coating composition according to the present invention comprises an extender having a fibrous and acicular structure.

An exemplary lab-scale application according to the method proposed in the present application is described below. By giving the following example, it is solely intended to provide a better understanding of the present invention and is as such not intended to limit the scope of the appended claims.

### EXAM PLES

Among the above mentioned extenders having fibrous and acicular structure, wollastonite was selected for the exemplary application of the method according to the present invention. A series of surface coating composition samples (i.e. paints) have been prepared by partly or completely substituting calcite extenders employed in several commercial paint formulations.

### Classification of samples:

Said samples were prepared as base paints.

A group of the samples were formulated to give opaque films, comprising titanium dioxide or extenders which give opaque films (opaque is abbreviated as **OP,** here). A first subgroup of said OP samples were high PVC (62% v/v) formulations (high PVC formulations providing opaque films, abbreviated as **OP-H**). Said subgroup corresponds to samples with sample codes OP-H-1 to OP-H-6.
A second subgroup (i.e. the rest) of said OP samples were low PVC (48% v/v) paints (low PVC formulations providing opaque films, abbreviated as **OP-L**), containing relatively higher ratios of binder in comparison with said high PVC formulations (OP-H's). Said subgroup corresponds to samples with sample codes OP-L-1 to OP-L-6.

Another group of the samples contain extenders which give semitransparent films (semitransparent is abbreviated as **T,** here). Some of said T samples were provided with color by addition of various pigment pastes, and the rest of the T samples were applied as prepared (maintained without addition of such pigment pastes). A first subgroup of said T samples were high PVC (62% w/w) formulations providing semi-transparent films, abbreviated as **T-H.** Said subgroup corresponds to samples with sample codes T-H-1 to T-H-6.

A second subgroup of said T samples were low PVC formulations providing semi-transparent films, abbreviated as **T-L,** containing relatively higher ratios of binder in comparison with said high PVC formulations (i.e. T-H's). Said subgroup corresponds to samples with sample codes T-L-1 to T-L-6.

As extender in the samples, two calcites with different average particle sizes, namely 6 µm and 27 µm, have been used. Here, the calcite with 6 µm average particle size is abbreviated as **CS** (abbreviation for "calcite" having "small" particle size); and the calcite with 27 µm average particle size is abbreviated as **CL** (abbreviation for "calcite" having "large" particle size). In order to establish the contribution of acicular extenders, these calcites have been partially or totally replaced with two different Wollastonites having corresponding average particle sizes of 4 µm and 26 µm and they are named **"WS"** and **"WL",** respectively. Here, WS and WL correspond to abbreviations for "wollastonite" having "small" particle size, and "wollastonite" having "large" particle size, respectively. Compositions of four examplary formulations selected from the above described samples are provided in the Table 1. Here the samples are OP-H-1, T-H-1, OP-L-1, and T-L-1 selected for representing their sub-classes which are high PVC opaque, high PVC semi-transparent, low PVC opaque, and low PVC semi-transparent, respectively.

**Table 1: Four exemplary formulations (namely OP-H-1, T-H-1, OP-L-1, and T-L-1) and their compositions.**

| **Components** | **% (w/w) in OP-H-1** | **% (w/w) in T-H-1** | **% (w/w) in OP-L-1** | **% (w/w) in T-L-1** |
|---|---|---|---|---|
| Water | 12.20 | 10.20 | 10.85 | 10.70 |
| Surfactant (Lopon P) | 1.00 | 1.00 | 1.00 | 1.00 |
| Thickener (Tylose H 100000 YP2) | 0.25 | 0.25 | 0.20 | 0.25 |
| pH Modifier (AMP 90) | 0.20 | 0.20 | 0.20 | 0.20 |
| Dispersant (Coatex BR 3) | 0.40 | 0.40 | 0.40 | 0.40 |
| Defoamer (Tego Foamex K-7) | 0.20 | 0.20 | 0.10 | 0.20 |
| Pigment (Ti-Pure R 902) | 20.00 | - | 20.00 | - |
| Extender CS (Esen Kalsit A-3)* | 24.00 | 40.00 | 21.00 | 33.00 |
| Extender CL (Esen Kalsit K-7)** | 13.50 | 15.50 | 6.50 | 11.50 |
| Thickener (Coatex BR 100 P) | 0.05 | 0.05 | 0.05 | 0.05 |
| Binder (Orgal PST 50A) | 20.00 | 24.00 | 35.00 | 38.00 |
| Silicone (Silres BS 2144) | 4.00 | 4.00 | - | - |
| Film Forming Agent (Dowanol DPnB) | 1.20 | 1.20 | 1.20 | 1.20 |
| Mono Ethylene Glycol | 2.50 | 2.50 | 3.00 | 3.00 |
| Biocide (Acticide BX) | 0.30 | 0.30 | 0.30 | 0.30 |
| Defoamer (Tego Foamex K-7) | 0.20 | 0.20 | 0.20 | 0.20 |
| **Total** | **100.00** | **100.00** | **100.00** | **100.00** |

| | | | | |
|---|---|---|---|---|
| Where OP, T, CS, CL, H, L stand for opaque paint, semitransparent paint, calcite extender with 6µm average particle size, calcite extender with 27µm average particle size, high PVC of 62%, and low PVC of 48%. * Partially or completely substituted with Wallostonite (NYAD 1250) in other formulations **Partially or completely substituted with Wallostonite (NYAD M 325) in other formulations | | | | |

Each of the above mentioned samples were prepared as 2 liter samples in a conventional paint disperser (Dissolver Dispermat CN) equipped with a blade having a diameter of 70mm. Water, surfactant, a first portion of thickener and pH modifier were loaded to the disperser and mixed at 750 rpm (low shear) for 5 minutes to obtain a first mixture. Then; dispersant, defoamer, pigment, extenders and a second portion of thickener were added to the first mixture and dispersed at 3000 rpm (high shear) for 10 to 15 minutes to obtain a grind. Finally, in the let-down stage; several additives including binder, silicone, film forming agent, co-solvent, biocide and defoamer was added onto the grind and mixed at 750 rpm (low shear) for 5 minutes.

All of the samples were tested for specific gravity (TS EN ISO 2811-1), pH (TS-5808), viscosity (TS-5808), stability at 52°C (TS-4324) and were found to be acceptable (with the exception of T-H-6, which exhibited rheological problems). The samples were also applied onto glass or other appropriate substrates for gloss (EN ISO 2813), hiding power (EN ISO 6504-3), water transmission rate (EN 1062-3) and water vapor transmission rate (EN ISO 7783) measurements. The measurement results are given in Table 2.

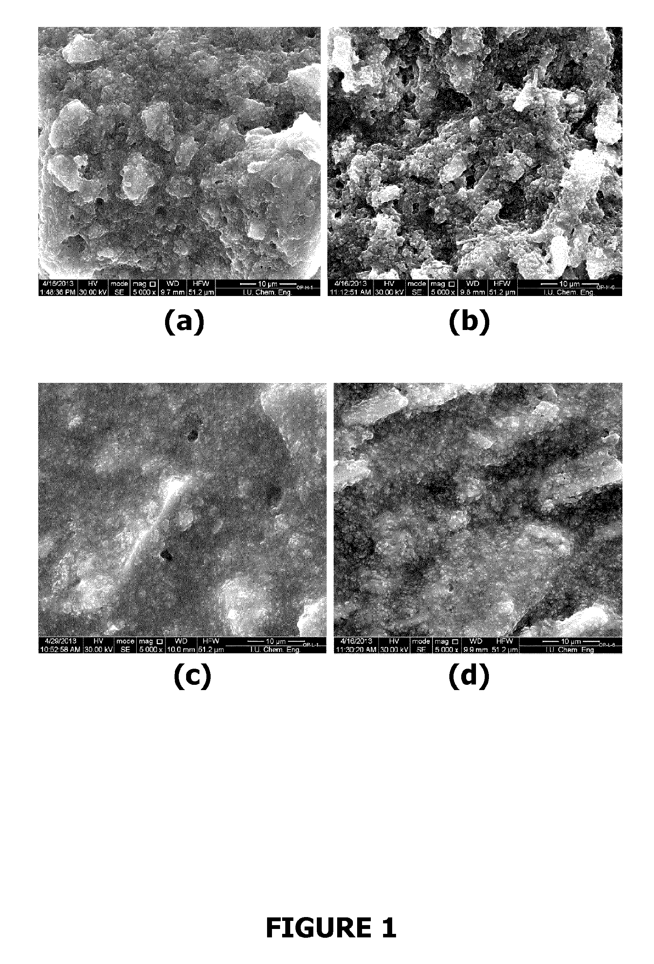

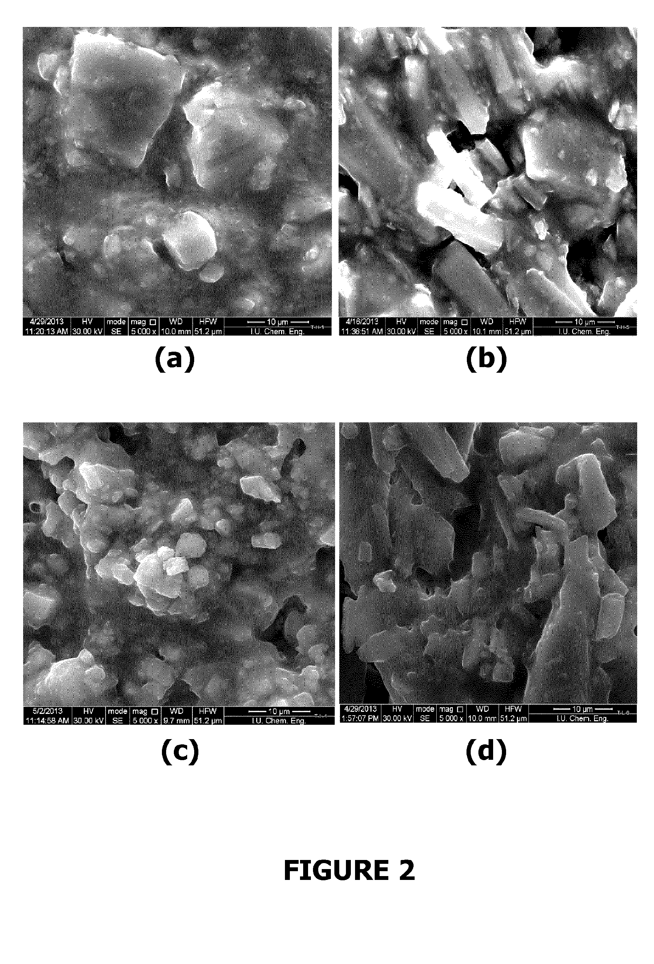

Table 2 proves that substituting granular calcite with acicular Wollastonite improves water vapor diffusion through the paint composite significantly and V1 grade can be obtained without loss in conventional paint properties. The effect of substitution is greater with high PVC opaque paints and even greater with high PVC transparent paints. The SEM micrographs (x5000) given in Figure 1 and 2 provide visual confirmation of the change in the structure of the paints, the formation of micro passageways (pores) facilitating the transmission of water vapor.

The most important property of a coating film prepared by using the surface coating composition according to the present invention, is the water vapor permeability (or water vapor transmittability, abbreviated in Table 2 as WVT). Among the high PVC opaque films obtained from samples OP-H-1 to OP-H-6, the latter shows the highest water vapor transmittability of 0.07m. Said sample comprises 24+13.5=37.5% (w/w) of wollastonite instead of calcite having various average particle sizes. The fibrous and acicular structure of wollastonite is responsible of this phenomenon, namely high performance in water vapor transmittance. Regarding semi-transparent high PVC films obtained using samples T-H-1 to T-H-6, the latter shows a surprisingly high performance in water vapor transmittance. Said sample comprises 40+15.5=55.5% of wollastonite instead of calcite having various average particle sizes. The water vapor transmittance test result for said film obtained from T-H-6 corresponded to an undetectably low value ("not determined", abbreviated as "N.D." in Table 2). This result indicates a surprisingly high performance obtained by the fibrous and acicular structure of wollastonite, which is also expected from other above-mentioned extenders having fibrous and acicular structures. Thus, the test results confirm that the fibrous and acicular structure of wollastonite is responsible for high performance in water vapor transmittance.

Regarding OP-L-1 to OP-L-6, the WVT value is significantly lower in the latter which comprises 21+6.5=27.5% (w/w) of wollastonite instead of calcites having various particle sizes in comparison with corresponding low PVC opaque films obtained from OP-L-1 to OP-L-5 containing calcite.

The same applies with the low PVC semi-transparent films obtained using samples T-L-1 to T-L-6. The latter which comprises 33-11.5=44.5% (w/w) of wollastonite instead of calcite having various average particle sizes, presents significantly higher WVT than the other films obtained using samples comprising calcite.

Comparative test results for all of the samples show that at least partly replacing non-acicular extenders (e.g. calcite) with a fibrous and acicular extender (e.g. wollastonite) significantly, even to a surprisingly high extent, improves the WVT values of surface coating films.

Figure 1 shows SEM Micrographs of opaque paints with sample codes of: (a) OP-H-1 and (b) OP-H-6 for visual comparison between two different opaque films obtained from respective samples having high PVC values. Additionally Figure 1 (c) OP-L-1, and (d) OP-L-6 serve for visual comparison between two different opaque films obtained from respective samples having low PVC values. The Figure 1 also serves for visual comparison between opaque and semi-transparent films from respective samples.

Figure 2 shows SEM Micrographs of semitransparent paints with sample codes of: (a) T-H-1, (b) T-H-5, (c) T-L-1, and (d) T-L-6. The amount of fibrous and acicular extenders in T-H-1 and T-L-1 is zero; where T-H-5 and T-L-6 comprise 15.5% (w/w) and 44.5% (w/w) of wollastonite, respectively. The results in Table 2, where T-H-5 and T-L-6 show significantly high WVT in comparison with respective samples T-H-1 and T-L-1 which comprise only non-acicular extender, the Figure 2 also visually proves that the high WVT films in (b) and (d) (obtained using T-H-5 and T-L-6, respectively) are significantly more porous than the low WVT films in (a) and (c) (obtained using T-H-1 and T-H-6, respectively).

**Table 2: Properties of samples prepared with different extenders.**

| **Sample code** | **Extender (% w/w)** | | | | **Hiding power** (%) | **Gloss** (85°) | **WVT** (m) | **WT** (kg/(m²·h^{0.}5)) |
|---|---|---|---|---|---|---|---|---|
| | **CS** | **CL** | **WS** | **WL** | | | | |
| **OP-H-1** | 24 | 13.5 | 0 | 0 | 97.2 | 0.9 | 0.62 | 0.01 |
| **OP-H-2** | 12 | 13.5 | 12 | 0 | 97.3 | 0.7 | 0.38 | 0.01 |
| **OP-H-3** | 0 | 13.5 | 24 | 0 | 97.2 | 0.7 | 0.42 | 0.01 |
| **OP-H-4** | 24 | 6.75 | 0 | 6.75 | 97.6 | 1.5 | 0.15 | 0.01 |
| **OP-H-5** | 24 | 0 | 0 | 13.5 | 98.2 | 3.7 | 0.13 | 0.02 |
| **OP-H-6** | 0 | 0 | 24 | 13.5 | 99.0 | 2.6 | 0.07 | 0.01 |
| **T-H-1** | 40 | 15.5 | 0 | 0 | N/A | 0.9 | 0.55 | 0.01 |
| **T-H-2** | 20 | 15.5 | 20 | 0 | N/A | 0.7 | 0.35 | 0.01 |
| **T-H-3** | 0 | 15.5 | 40 | 0 | N/A | 0.7 | 0.17 | 0.01 |
| **T-H-4** | 40 | 7.75 | 0 | 7.75 | N/A | 1.5 | 0.09 | 0.01 |
| **T-H-5** | 40 | 0 | 0 | 15.5 | N/A | 3.7 | 0.07 | 0.02 |
| **T-H-6** | 0 | 0 | 40 | 15.5 | N/A | N.D. | N.D | N.D |
| **OP-L-1** | 21 | 6.5 | 0 | 0 | 97.8 | 3.5 | 0.51 | 0.01 |
| **OP-L-2** | 10.5 | 0 | 10.5 | 0 | 97.8 | 2.2 | 0.37 | 0.01 |
| **OP-L-3** | 0 | 0 | 21 | 0 | 98.3 | 1.3 | 0.39 | 0.01 |
| **OP-L-4** | 21 | 3.25 | 0 | 3.25 | 97.9 | 2.8 | 0.53 | 0.01 |
| **OP-L-5** | 21 | 0 | 0 | 6.5 | 97.8 | 5.2 | 0.34 | 0.01 |
| **OP-L-6** | 0 | 0 | 21 | 6.5 | 98.2 | 2.4 | 0.35 | 0.01 |
| **T-L-1** | 33 | 11.5 | 0 | 0 | N/A | 3.5 | 0.42 | 0.01 |
| **T-L-2** | 16.5 | 0 | 16.5 | 0 | N/A | 2.2 | 0.39 | 0.01 |
| **T-L-3** | 0 | 0 | 33 | 0 | N/A | 1.3 | 0.25 | 0.01 |
| **T-L-4** | 33 | 5.75 | 0 | 5.75 | N/A | 2.8 | 0.33 | 0.01 |
| **T-L-5** | 33 | 0 | 0 | 11.5 | N/A | 5.2 | 0.24 | 0.01 |
| **T-L-6** | 0 | 0 | 33 | 11.5 | N/A | 5.0 | 0.13 | 0.01 |

In Table 2; OP, T, CS, CL, WS and WL are abbreviations for opaque paint, semitransparent paint, calcite extender with 6 µm average particle size, calcite extender with 27µm average particle size, wollastonite extender with 4 µm average particle size, and wollastonite extender with 26 µm average particle size, respectively. H and L stand for high PVC of 62%, and low PVC of 48%, respectively. N.D. here is the abbreviation of "not determined".

The results in Table 2 also indicate that wollastonite have contributed to hiding power. Even if the films obtained by OP-H-1 and OP-L-1 are virtually non-porous as seen in Figure 1, the hiding power values obtained from OP-H-6 and OP-L-6 are significantly higher than that from OP-H-1 and OP-L-1, respectively. This also shows that porosity on a coating film does not contribute to transparency or does not affect opacity, and a porous film with a desired opacity can be obtainable with a surface coating composition according to the present invention.

As supported by the data shown in Table 2, presence of wollastonite in the samples strongly affects the water WVT of coating films obtained therefrom. The favorable results led us to a generalization that samples containing 5% (w/w) or more of WL, and more preferably samples further containing 10% (w/w) or more of WS provided a very high performance in water vapor transmission in coating films formed therefrom. As mentioned above, WS and WL used in the experiments were wollastonites having average particle sizes of 4 µm and 26 µm, respectively. Yet, even if the results obtained from wollastonite containing samples led us to decide that wollastonite is especially favorable to be employed in the surface coating composition according to the present invention; highly acceptable WVT results can be also achievable by employing one or more of other fibrous and acicular extenders with or instead of wollastonite.

Even though wollastonite is preferred, the use of WS having an average particle size of 4µm in the experiments, can be generalized to low particle size acicular extenders which are hereby defined by having an average particle size ranging between 2.5 µm and 10µm, and an aspect ratio higher than 4:1.

Likewise, the use of WL having an average particle size of 26 µm in the experiments, can be generalized to high particle size acicular extenders which are hereby defined by having an average particle size greater than 10 µm and an aspect ratio higher than 4:1.

In a more general aspect, an acicular extender suitable for being considered for use in a surface coating composition according to the present invention has an aspect ratio higher than 4:1. Hence, in the aspect of the present invention, acicular extender is defined by having an aspect ratio higher than 4:1.

Thus, the surface coating composition according to the present invention comprises at least %5 by weight of acicular extender with respect to the total weight of the surface coating composition.

In a preferred embodiment according to the present invention, the surface coating composition according to the present invention comprises at least %5 by weight of high particle size acicular extender with respect to the total weight of the surface coating composition.

In another preferred embodiment according to the present invention, the surface coating composition according to the present invention comprises at least %10 by weight of low particle size acicular extender with respect to the total weight of the surface coating composition.

In a further preferred embodiment according to the present invention, the surface coating composition according to the present invention comprises at least %5 by weight of high particle size acicular extender and further comprises at least %10 by weight of low particle size acicular extender with respect to the total weight of the surface coating composition.

In a preferred embodiment of the surface coating composition according to the present invention, the acicular extender comprises one or more material selected from the list consisting of wollastonite, stilbite, goethite, aragonite, diaspore, halloysite, cerussite, pectolite, wavellite, chrysolite, acicular pyroxene and inosilicates. More preferably, the acicular extender comprises wollastonite.

Each of the films formed from the surface coating composition samples according to the present invention, which are given in Table 2, shown very low liquid water transmittance values (WT). Thus, the high water vapor transmission ability due to acicular extenders did not negatively affect the water impermeability of the films formed from the surface coating composition according to the present invention. The last column of the Table 2 shows that the maximum measurement value of liquid water transmittance was 0.2 kg/(m²·h^{0.5}), obtained with samples having sample codes OP-H-5 and T-H-5; and the remaining 21 samples have shown a measurement value of liquid water transmittance of only 0.1 kg/(m²·h^{0.5}). The liquid water transmittance value for T-H-6 was not measured because of the rheological problems encountered with said sample. Thus, the surface coating composition according to the present invention increases the water vapor transmission of the film without sacrificing the liquid water impermeability.

The presence of fibrous and acicular extenders within the surface coating composition samples according to the present invention shown surprisingly a positive effect on hiding power of the films obtained therefrom. It was expected to observe decreased hiding power values due to relatively porous structures of the films obtained with the surface coating composition according to the present invention. But as shown in the Table 2, for the opaque samples coded OP-L-1 to OP-L-6, and especially for OP-H-1 to OP-H-6 the hiding power values increase instead of dropping, with the acicular extenders included in samples prepared according to the present invention. Especially regarding OP-H-1 to OP-H-6, the hiding power values increment shows consistency with increasing amounts of high and low particle size acicular extenders included in the surface coating composition samples OP-H-4 to OP-H-6, which are prepared according to the present invention. Thus, the surface coating composition according to the present invention increases the water vapor transmission of the film without sacrificing the hiding power.

The presence of acicular extender, providing a water vapor permeable, thus porous structure to films obtained therefrom, was expected to increase the roughness of the film surface and thus decrease the gloss thereof. Regarding the 85° gloss values for the films obtained from the surface coating compositions according to the present invention, shown in the Table 2, the gloss values ascend slightly, with increasing amounts of acicular extenders included into the surface coating compositions according to the present invention. Thus, the surface coating composition according to the present invention increases the water vapor transmission of the film without affecting the gloss.

A further aspect of the present invention is provision of a method for preparation of a surface coating composition for formation of films having high water vapor permeability. The method according to the present invention comprises the following sequential steps:
a) loading water, one or more surfactant, one or more thickener and one or more pH modifier into a vessel, and applying a low-shear mixing thereon for at least three minutes, thus obtaining a first mixture;
b) adding dispersants and a first portion of additive comprising one or more additive selected from a list consisting of defoamers, pigments, fillers, and thickeners; and adding one or more acicular extender having an aspect ratio higher than 4:1 onto said first mixture, and applying a high-shear mixing thereon for 10 to 15 minutes, thus obtaining a grind;
c) adding one or more binder and a second portion of additives, and applying a low-shear mixing thereon for at least three minutes; wherein said second portion of additives comprises one or more additive selected from a list consisting of silicone, film forming agents, co-solvents, biocides, and defoamers; thus obtaining a surface coating composition;
wherein the amount of acicular extender added in step (b) is such that the final weight percentage of acicular extender is at least 5% by weight of the final total weight of the surface coating composition.

In a preferred embodiment of the method according to the present invention, the acicular extender is a high particle size acicular extender having an average particle size greater than 10 µm.

In another preferred embodiment of the method according to the present invention, the acicular extender is a low particle size acicular extender having an average particle size ranging between 2.5µm and 10µm. More preferably, at least %10 by weight of low particle size acicular extender is added as acicular extender in step (b), with respect to the final total weight of the surface coating composition.

In a further preferred embodiment of the method according to the present invention, at least %5 by weight of high particle size acicular extender having an average particle size greater than 10 µm, and at least %10 by weight of low particle size acicular extender having an average particle size ranging between 2.5µm and 10µm, are added as acicular extender in step (b), with respect to the total weight of the surface coating composition.

The terms "high-shear" and "low-shear" mixings used in the method steps according to the present invention are widely recognized in the art. High-shear mixing is used in the adhesives, chemical, cosmetic, food, pharmaceutical, and plastics industries for emulsification, homogenization, particle size reduction, and dispersion, where the disperser shaft rotates with a speed higher than 1500 rpm, preferably within a range between 2000 rpm and 4000 rpm, e.g. at 3000 rpm. In low-shear mixing, the disperser shaft rotates with a speed lower than 1500 rpm, preferably within a range between 300 rpm and 1000 rpm, e.g. at 750 rpm.

S_{d} values lower than 0.14 m are considered as an indication of high water vapor transmittability. S_{d} values equal to or greater than 0.14 m and up to 1.4 m are considered as an indication of medium water vapor transmittability. Liquid water transmittance values equal to or lower than 0.1 kg/(m2·h0.5)) are considered as an indication of low liquid water permeability, or also as high liquid water impermeability.

Following objects are thus achieved with the present invention:
- overcoming the abovementioned shortcomings of the prior art;
- provision of a surface coating composition for formation of films having high water vapor permeability and high liquid water impermeability;
- provision of a method for preparation of a surface coating composition for formation of films having high water vapor permeability and high liquid water impermeability;
- provision of such surface coating composition and method for preparation thereof, without affecting the gloss and where applicable, the hiding power.

## Claims

1. A surface coating composition for formation of films having high water vapor permeability and high liquid water impermeability, comprising at least %5 by weight of acicular extender having an aspect ratio higher than 4:1, with respect to the total weight of the surface coating composition.

2. A surface coating composition according to the Claim 1, wherein the acicular extender is a high particle size acicular extender having an average particle size greater than 10 µm.

3. A surface coating composition according to the Claim 1, wherein the acicular extender is a low particle size acicular extender having an average particle size ranging between 2.5µm and 10µm.

4. A surface coating composition according to the Claim 3, wherein the surface coating composition comprises at least %10 by weight of low particle size acicular extender, with respect to the total weight of the surface coating composition.

5. A surface coating composition according to the Claim 1, wherein the surface coating composition comprises at least %5 by weight of high particle size acicular extender having an average particle size greater than 10 µm, and the surface coating composition further comprises at least %10 by weight of low particle size acicular extender having an average particle size ranging between 2.5µm and 10µm, with respect to the total weight of the surface coating composition.

6. A surface coating composition according to any of the Claims 1-5, wherein the acicular extender comprises one or more material selected from the list consisting of wollastonite, stilbite, goethite, aragonite, diaspore, halloysite, cerussite, pectolite, wavellite, chrysolite, acicular pyroxene and inosilicates.

7. A surface coating composition according to the Claim 6, wherein the acicular extender comprises wollastonite.

8. A method for preparation of a surface coating composition for formation of films having high water vapor permeability and high liquid water impermeability, wherein said method comprises the following sequential steps:
a) loading water, one or more surfactant, one or more thickener and one or more pH modifier into a vessel, and applying a low-shear mixing thereon for at least three minutes, thus obtaining a first mixture;
b) adding dispersants and a first portion of additive comprising one or more additive selected from a list consisting of defoamers, pigments, fillers, and thickeners; and adding one or more acicular extender having an aspect ratio higher than 4:1 onto said first mixture, and applying a high-shear mixing thereon for 10 to 15 minutes, thus obtaining a grind; and
c) adding one or more binder and a second portion of additives, and applying a low-shear mixing thereon for at least three minutes; wherein said second portion of additives comprises one or more additive selected from a list consisting of silicone, film forming agents, co-solvents, biocides, and defoamers; thus obtaining a surface coating composition;
wherein the amount of acicular extender added in step (b) is such that the final weight percentage of acicular extender is at least 5% by weight of the final total weight of the surface coating composition.

9. A method according to the Claim 8, wherein the acicular extender is a high particle size acicular extender having an average particle size greater than 10 µm.

10. A method according to the Claim 8, wherein the acicular extender is a low particle size acicular extender having an average particle size ranging between 2.5µm and 10µm.

11. A method according to the Claim 10, wherein at least %10 by weight of low particle size acicular extender is added as acicular extender in step (b), with respect to the final total weight of the surface coating composition.

12. A method according to the Claim 8, wherein at least %5 by weight of high particle size acicular extender having an average particle size greater than 10 µm, and at least %10 by weight of low particle size acicular extender having an average particle size ranging between 2.5µm and 10µm, are added as acicular extender in step (b), with respect to the total weight of the surface coating composition.
